# EUROPEAN PATENT APPLICATION

(11) **EP 4 535 267 A1**
(43) Date of publication of application: **09.04.2025**
(21) Application number: 24204642.3
(22) Date of filing: 04.10.2024
(51) Int. Cl.: G06Q 20/32

(54) **PAYMENT METHOD, APPARATUS AND DEVICE**

(30) Priority: 08.10.2023 CN 202311296109
(71) Applicant: Alipay.com Co. Ltd, Shanghai 200120 (CN)
(72) Inventor: SHEN, Zhihua, Shanghai, 200120 (CN)
(74) Representative: Winter, Brandl - Partnerschaft mbB

(57) **Abstract**

Embodiments of this specification disclose a payment method, apparatus, and device, applied to a client of a payment application. A solution includes: receiving a wakeup instruction, where an initiation manner of the wakeup instruction includes: a mobile device in which the client is located reads a short-range wireless communication tag of a payee, to obtain a corresponding code value, sends the wakeup instruction to the client, and provides the code value; obtaining related information of the payee based on the code value in response to the wakeup instruction; simulating, based on the related information, a predetermined process of code scanning payment performed when the payee serves as a code scanning party; and initiating a payment request to a corresponding server instead of the payee by executing the simulated predetermined process, to obtain a payment result returned by the server.

## Description

### TECHNICAL FIELD

This specification relates to the field of electronic payment technologies, and in particular, to a payment method, apparatus and device.

### BACKGROUND

With development of electronic payment technologies and use popularization of smart mobile devices, two-dimensional code-based payment has become one of main payment means of micropayment in people's daily life, and brings great convenience to both a payer and a payee.

There are mainly two specific user operation manners of the two-dimensional code-based payment. For example, a user serves as a payer, and a merchant serves as a payee. In a first manner, the user generates and displays a payment code in a terminal (which is usually a mobile phone) of the user, and the merchant scans the payment code by using a code scanning machine such as a code scanner, to implement payment. This manner belongs to a scenario in which the payee performs scanning. In a second manner, the merchant displays (through electronic display or physical display) a collection code of the merchant, and the user scans the collection code by using a camera of a terminal of the user, to implement payment. This manner belongs to a scenario in which the payer performs scanning.

However, as wearable devices represented by smart watches gradually emerges, more users pay by using the smart watches. In this case, because the smart watch is worn on a wrist, a hand can be directly extended to perform an operation, without a need to specially take a mobile phone out of a pocket or a bag. In this way, convenience is further improved.

Currently, many smart watches have no camera. In this case, when two-dimensional code-based payment is performed by using such a smart watch, because the collection code of the merchant cannot be scanned, the second manner cannot be used, and only the first manner can be used, to display the payment code in the smart watch, so that the merchant scans the code. However, in actual applications, because many small merchants (for example, stores or street pedlars) do not have a code scanning machine such as a code scanner, only a collection code of the small merchant is printed and posted, and is provided for the user to perform code scanning for payment, and the first manner is not supported. Therefore, in such a small merchant scenario, it is usually difficult for the user to perform two-dimensional code-based payment by using a wearable device without a camera, for example, such a smart watch.

In view of this, for the small merchant scenario, a solution that better helps a user to pay based on a wearable device and a two-dimensional code is needed.

### SUMMARY

One or more embodiments of this specification provide a payment method, apparatus and device, and a storage medium, to resolve the following technical problem: A solution that better helps a user to pay based on a wearable device and a two-dimensional code is needed.

To resolve the above-mentioned technical problem, one or more embodiments of this specification are implemented as follows:

One or more embodiments of this specification provide a payment method, applied to a client of a payment application. The method includes:
receiving a wakeup instruction, where an initiation manner of the wakeup instruction includes: a mobile device in which the client is located reads a short-range wireless communication tag of a payee, to obtain a corresponding code value, sends the wakeup instruction to the client, and provides the code value;
obtaining related information of the payee based on the code value in response to the wakeup instruction;
simulating, based on the related information, a predetermined process of code scanning payment performed when the payee serves as a code scanning party; and
initiating a payment request to a corresponding server instead of the payee by executing the simulated predetermined process, to obtain a payment result returned by the server.

One or more embodiments of this specification provide a payment apparatus, applied to a client of a payment application. The apparatus includes:
an instruction receiving module, configured to receive a wakeup instruction, where an initiation manner of the wakeup instruction includes: a mobile device in which the client is located reads a short-range wireless communication tag of a payee, to obtain a corresponding code value, sends the wakeup instruction to the client, and provides the code value;
a code value parsing module, configured to obtain related information of the payee based on the code value in response to the wakeup instruction;
a payee code scanning simulation module, configured to simulate, based on the related information, a predetermined process of code scanning payment performed when the payee serves as a code scanning party; and
a payment request module, configured to initiate a payment request to a corresponding server instead of the payee by executing the simulated predetermined process, to obtain a payment result returned by the server.

One or more embodiments of this specification provide a payment device, applied to a client of a payment application. The device includes:
at least one processor; and
a memory communicatively connected to the at least one processor.

The memory stores instructions that can be executed by the at least one processor, and the instructions are executed by the at least one processor, to enable the at least one processor to perform the following operations:
receiving a wakeup instruction, where an initiation manner of the wakeup instruction includes: a mobile device in which the client is located reads a short-range wireless communication tag of a payee, to obtain a corresponding code value, sends the wakeup instruction to the client, and provides the code value;
obtaining related information of the payee based on the code value in response to the wakeup instruction;
simulating, based on the related information, a predetermined process of code scanning payment performed when the payee serves as a code scanning party; and
initiating a payment request to a corresponding server instead of the payee by executing the simulated predetermined process, to obtain a payment result returned by the server.

One or more embodiments of this specification provide a nonvolatile computer storage medium, storing computer-executable instructions, and applied to a client of a payment application. The computer-executable instructions are set to:
receiving a wakeup instruction, where an initiation manner of the wakeup instruction includes: a mobile device in which the client is located reads a short-range wireless communication tag of a payee, to obtain a corresponding code value, sends the wakeup instruction to the client, and provides the code value;
obtaining related information of the payee based on the code value in response to the wakeup instruction;
simulating, based on the related information, a predetermined process of code scanning payment performed when the payee serves as a code scanning party; and
initiating a payment request to a corresponding server instead of the payee by executing the simulated predetermined process, to obtain a payment result returned by the server.

In one or more embodiments of this specification, the above-mentioned at least one technical solution can achieve the following beneficial effects: A small merchant sets a short-range wireless communication tag to which related information (for example, an identity or a code value of a collection code) of the small merchant is written, to conveniently implement support for payment based on a wearable device. A user can specifically read the short-range wireless communication tag by using the wearable device, to obtain the related information of the small merchant. Further, even if the wearable device of the user does not have a code scanning function, and the small merchant does not have a code scanning machine and does not actually scan a code of the user, the user can simulate a process in which the small merchant interacts with a server after the small merchant scans a code. Therefore, the server can complete payment processing by referring to the process after the small merchant scans a code. For both of a payer and a payee, a hardware requirement is reduced, convenience is also improved, and payment experience is better. The server can use existing processing logic, and implementation costs are low.

### BRIEF DESCRIPTION OF DRAWINGS

To describe the technical solutions in the embodiments of this specification or in the existing technology more clearly, the following briefly describes the accompanying drawings needed for describing the embodiments or the existing technology. Clearly, the accompanying drawings in the following descriptions merely show some embodiments of this specification, and a person of ordinary skill in the art can still derive other drawings from these accompanying drawings without creative efforts.
FIG. 1 is a schematic flowchart of a payment method according to one or more embodiments of this specification;
FIG. 2 is a schematic flowchart of a specific implementation solution of a payment method according to one or more embodiments of this specification;
FIG. 3 is a schematic diagram of an application scenario of the method in FIG. 1 according to one or more embodiments of this specification;
FIG. 4 is a schematic flowchart of a solution in which a client of a user simulates a scenario in which a payee performs scanning and pays a merchant in the scenario in FIG. 3 according to one or more embodiments of this specification;
FIG. 5 is a schematic flowchart of a payment amount control solution when a client of a payer simulates a scenario in which a payee performs scanning according to one or more embodiments of this specification;
FIG. 6 is a schematic structural diagram of a payment apparatus according to one or more embodiments of this specification; and
FIG. 7 is a schematic structural diagram of a payment device according to one or more embodiments of this specification.

### DESCRIPTION OF EMBODIMENTS

Embodiments of this specification provide a payment method, apparatus, and device, and a storage medium.

To make a person skilled in the art better understand the technical solutions in this specification, the following clearly and comprehensively describes the technical solutions in the embodiments of this specification with reference to the accompanying drawings in the embodiments of this specification. Clearly, the described embodiments are merely some but not all of the embodiments of this specification. All other embodiments obtained by a person of ordinary skill in the art based on the embodiment of this specification without creative efforts shall fall within the protection scope of this application.

It can be learned from descriptions in the background that many small merchants do not have a code scanning machine such as a code scanner due to limitations of operating costs, a place, etc. Consequently, a payment scenario in which a merchant performs scanning is not supported. When a user uses a mobile device without a camera or without a camera supporting code scanning, it is difficult to implement scanning performed by the user. Consequently, there is a dilemma.

In view of this, an idea of this application is as follows: An essential reason why a merchant cannot perform scanning is that the merchant cannot obtain, through code scanning, an authorization credential provided by a user by using a payment code, and therefore, cannot request a server to perform a deduction on a basis. A user can conveniently and securely obtain a payment code of the user. Therefore, it is considered that the user simulates, instead of the merchant, a process in which the merchant performs scanning (a case in which the merchant performs scanning is simulated here because compared with a case in which the user performs scanning, in the case in which the merchant performs scanning, there is additional particularity, which is specifically described below). In this process, the user needs to obtain related information of the merchant to a relatively small extent, to implement simulation. Therefore, a short-range wireless communication tag is introduced as a channel for obtaining the related information. Costs are low, and it is convenient for the merchant to perform deployment. Further, based on an increase in a role capability brought through simulation, a security problem that a payment amount cannot be perceived in advance when the user pays in a conventional manner in which the merchant performs scanning, and a mutual trust between a payer and a payee can be strengthened.

The following continues to describe the solutions in this application in detail based on such an overall idea.

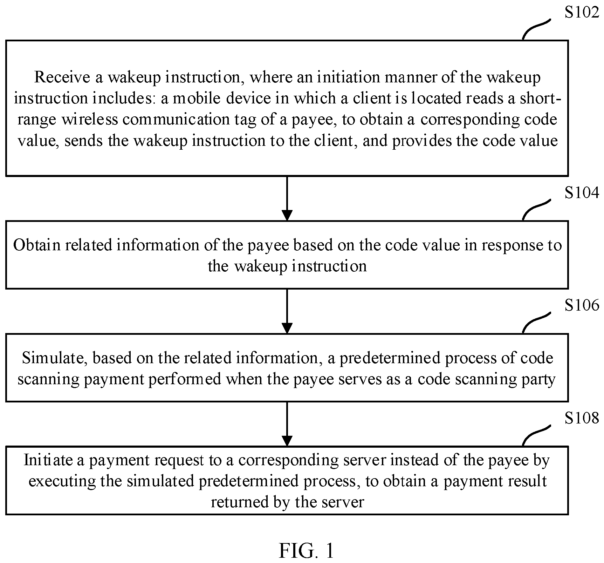

FIG. 1 is a schematic flowchart of a payment method according to one or more embodiments of this specification. The method can be applied to a client of a payment application, and the client is installed on a mobile device. For a mobile device such as a wearable device, especially a wearable device without a camera supporting code scanning, an advantage of the solution can be embodied particularly. The wearable device is represented by a smart watch. In addition, this solution may be further used for some other wearable devices (for example, a smart band) that can support short-range wireless communication. For ease of description, the smart watch is mainly used as an example for description in some of the following embodiments.

A procedure in FIG. 1 includes the following steps.

S 102: Receive a wakeup instruction, where an initiation manner of the wakeup instruction includes: the mobile device in which the client is located reads a short-range wireless communication tag of a payee, to obtain a corresponding code value, sends the wakeup instruction to the client, and provides the code value.

In one or more embodiments of this specification, the payee (for example, the above-mentioned small merchant) is deployed with a short-range wireless communication tag in advance, and related information (for example, the related information is presented by using a corresponding code value, which does not need to be a plaintext, and security is relatively good) of the payee is written to the short-range wireless communication tag. An identity of the payee can be determined based on the related information, for example, a merchant name or a collection account. A server of the payment application can transfer, to the payee based on the identity, an amount paid by a payer.

The related information is, for example, information included in a collection code (which is usually a two-dimensional code currently) of the payee. To facilitate payment in different manners, the payee can further deploy the short-range wireless communication tag on the basis of providing the collection code for the user to scan the code for payment, to be used by a payer who is inconvenient or unable to scan the code. In this case, for example, a collection code generated by the payee based on the code value is further presented at a proximity location of the short-range wireless communication tag, and the payer can flexibly select the short-range wireless communication tag or the collection code based on a device situation of the payer for interaction. Specifically, the code value can be first written to the short-range wireless communication tag, or the collection code can be first generated based on the code value. Preparations for the two manners can be performed independently.

In one or more embodiments of this specification, because many mobile devices support a near field communication (NFC) function, and costs of an NFC tag are relatively low, the NFC tag can serve as the short-range wireless communication tag. In this case, short-range wireless communication is specifically near field communication.

In one or more embodiments of this specification, when the payer needs to pay, the payer can extend a hand to move a smart watch worn by the payer to the short-range wireless communication tag of the payee, and read, by using a corresponding short-range wireless communication module in the smart watch, a code value included in the short-range wireless communication tag. The client of the payment application in the smart watch can be woken up by using a microprocessor or a related module in the smart watch, and the code value read by the short-range wireless communication module can be provided to the client of the payment application. In this process, an operation is easy for the payer. If the payer expects, it is even possible that an operation is not performed on a dial plate of the smart watch. In this way, experience is relatively good.

S104: Obtain related information of the payee based on the code value in response to the wakeup instruction.

In one or more embodiments of this specification, the code value can be locally parsed on the client, or the client parses the code value by using the server, to obtain the related information of the payee. In this way, this helps the client directly understand a current payer, and helps improve payment security. Certainly, the code value can also be used as the related information of the payee.

S106: Simulate, based on the related information, a predetermined process of code scanning payment performed when the payee serves as a code scanning party.

In one or more embodiments of this specification, the simulating a predetermined process of code scanning payment performed when the payee serves as a code scanning party can include: determining the client to replace a role of the payee in a scenario in which the payee performs scanning, and determining how to perform the predetermined process in a case of a role replacement. It should be noted that, in addition to the role replacement, based on an actual requirement, the simulated predetermined process and an original predetermined process can differ in a specific action. However, regardless of whether these differences exist, a response of the server end needs to be affected as little as possible or is even not affected. In this way, a transformation required for implementing the solution is mainly performed on the client, and costs are relatively low.

For ease of understanding, the scenario in which the payee performs scanning and the role replacement are described. Usually, in this scenario, the payer generates and displays the payment code of the payer, and the payee scans the payment code, to obtain corresponding credential information of the payer, and then initiates the payment request to the server based on the credential information, to request to perform a deduction from the payer and transfer an amount to the payee. After the role is replaced, the payee does not need to initiate the payment request, and the payer initiates the payment request to the server based on the credential information of the payer and the previously obtained related information of the payee (to determine who to pay), to request to perform a deduction from the payer and transfer an amount to the payee. The server can still consider that the payment request is sent by the payee, and does not need to pay attention to or even does not need not perceive the role replacement. Therefore, after receiving the payment request, the server can still use subsequent processing logic in the scenario in which the payee performs scanning.

It should be noted that, after obtaining the related information of the payee, the client can also perform a process in a scenario in which the payer performs scanning. That is, the server directly initiates a transfer to the payee, to implement payment. However, this application mainly focuses on simulating the scenario in which the payee performs scanning. There are two reasons:

A first reason is as follows: For the payee and the server, simulating the scenario in which the payee performs scanning is very likely to involve one or more piece of additional processing logic. Essentially, in this scenario, the server usually provides an additional service for the payee. The additional service may be a free service, or may be a reimbursable service or even a higher paid value-added service (in a case of reimbursement, a corresponding service charges a small amount of fees in forms such as a service fee or a membership fee), and the additional service brings additional convenience to the payee, for example, a faster response speed, a higher security guarantee, more attracting resources, lower purchasing costs, more activity discounts, or a more perfect accounting service, and the convenience is also implemented by using service logic of the server. However, in the scenario in which the payer performs scanning, the payee may not be able to obtain the convenience.

A second reason is as follows: For the server, there is a service logic that can be reused in the predetermined process in the scenario in which the payee performs scanning, and implementation costs are very small. In comparison with a processing process in the scenario in which the payer performs scanning, there is no large difference in costs and response speeds. In addition, when the payer does not want to manually enter a payment amount, an interaction speed is faster, and it is very applicable to a wearable device such as a smart watch. In the scenario in which the payer performs scanning, the payer needs to manually enter the payment amount. There is a relatively large limitation.

S108: Initiate a payment request to a corresponding server instead of the payee by executing the simulated predetermined process, to obtain a payment result returned by the server.

In one or more embodiments of this specification, the client obtains the related information of the payee based on the short-range wireless communication tag of the payee without relying on a camera of the mobile device. The payer temporarily does not need to interact with the server, and the interaction is simulated by the client, so that from a perspective of the server, it appears that the payee scans the payment code of the payer and then interacts with the server.

Specifically, for example, the credential information that can be obtained when the corresponding payment code presented by the payer is scanned when the payee serves as the code scanning party is obtained, and the payment request is initiated to the corresponding server instead of the payee based on the credential information and the related information. The client can generate the payment code of the payer or information included in the payment code, and use the payment code or the information as the credential information that can be obtained when the corresponding payment code presented by the payer is scanned when the payee serves as the code scanning party.

In addition, the credential information can be generated through incorporation based on the related information. In this case, the generated credential information is different from conventional credential information, and a product-related extension field can be added more flexibly, to support an optional extension request (for example, an extension request related to product reservation and/or product customization). The payer optionally performs a value assignment operation on the product-related extension field, so that the product-related extension field is valid in a current payment process.

In this case, the client receives the value assignment operation performed by the payer on the product-related extension field, and initiates, to the corresponding server instead of the payee based on the product-related extension field obtained after a value assignment, the credential information, and the related information, a payment request that carries an extension request corresponding to the value assignment. Therefore, a longer and rich effect can be achieved through one time of payment, to bring convenience to the payer.

For example, a product series reservation field is added. If a product currently paid by the payer is one in a product series, subsequent products introduced successively. In this case, when the payer pays, the payer can actively operate the product series reservation field, so that when payment is implemented, the subsequent products are reserved conveniently. In this way, the subsequent products are not easily missed. Further, a product attribute customization field can also be added to the product series reservation field, to pre-select, for such a series, a product that satisfies a customization condition and that may be subsequently introduced (a subsequently actually introduced product does not satisfy a customized attribute, and such a product does not hit reservation of the payer).

The simulated predetermined process can alternatively include fewer steps. For example, when the credential information simpler than the payment code is generated, simulation steps mainly focus on a subsequent process of interacting with the server. To enable the server to correctly process the simpler credential information, the server can negotiate with the server in advance. In this case, the server can perceive simulation performed by the client, and can further more efficiently continue to process a payment process.

To further improve security, the server can also clearly perceive the simulation performed by the client, so that risk control is performed for the client when there is a need, or interactive verification is actively performed with the payee, to improve a trust relationship between the three parties.

According to the method in FIG. 1, a small merchant sets a short-range wireless communication tag to which related information (for example, an identity or a code value of a collection code) of the small merchant is written, to conveniently implement support for payment based on a wearable device. A user can specifically read the short-range wireless communication tag by using the wearable device, to obtain the related information of the small merchant. Further, even if the wearable device of the user does not have a code scanning function, and the small merchant does not have a code scanning machine and does not actually scan a code of the user, the user can simulate a process in which the small merchant interacts with a server after the small merchant scans a code. Therefore, the server can complete payment processing by referring to the process after the small merchant scans a code. For both of a payer and a payee, a hardware requirement is reduced, convenience is also improved, and payment experience is better. The server can use existing processing logic, and implementation costs are low.

Based on the method in FIG. 1, this specification further provides some specific implementation solutions and extended solutions of the method. The following continues to provide descriptions.

In the conventional scenario in which the payee performs scanning, the payer can only display the payment code passively, and wait for the payee to scan the code. The payment amount is entered (automatically entered through product identification or manually entered by the payee) on a machine of the payee. The payer cannot perceive an actual payment amount in a timely manner when the payment code is presented, and can learn, only after a deduction is completed, the actual payment amount from a notification message pushed by the server. Some payers do not care about such a notification.

In this process, there are a plurality of risks. For example, the payment amount may be wrong due to a product identification error or a manual operation error of the payee, and in particular, an over deduction may actually occur. The payer is too passive. For another example, after the payment code is generated, the payment code is temporarily exposed in a public environment before being scanned, especially when the payer is relatively careless and the payee does not perform a code scanning action deftly and attentively.

However, a role replacement is performed by using the solution that is provided in this application and in which the client of the payer simulates the scenario in which the payee performs scanning. Because the payer does not need to directly display the payment code to the payee, and even does not need to display the payment code on the dial plate, security of the payment code and the credential information included in the payment code is greatly improved. In addition, in such a simulation case, the payer has a higher initiative. In this case, the client of the payer interacts with the server, and therefore, the payer or the client can be allowed to control the payment amount, to resolve a problem that the payer cannot perceive the actual payment amount in a timely manner when presenting the payment code in the conventional scenario in which the payee performs scanning.

In one or more embodiments of this specification, for example, the payer is allowed to control the payment amount. When the payment request is initiated to the corresponding server instead of the payee by executing the simulated predetermined process, the payment amount input page can be specifically displayed on the client, to receive the payment amount entered by the payer. The payer can perform an operation on the dial plate of the smart watch. When the payment amount is entered on the payment amount input page, the client initiates, to the corresponding server based on the received payment amount, the payment request (for example, equal to or less than the payment amount) limited by the payment amount.

It should be noted that whether the step of entering the payment amount is performed can be determined by the payer. When the step is not performed, the payer does not need to perform an operation on the dial plate. In this way, a payment process is simpler and smoother, and user experience is better.

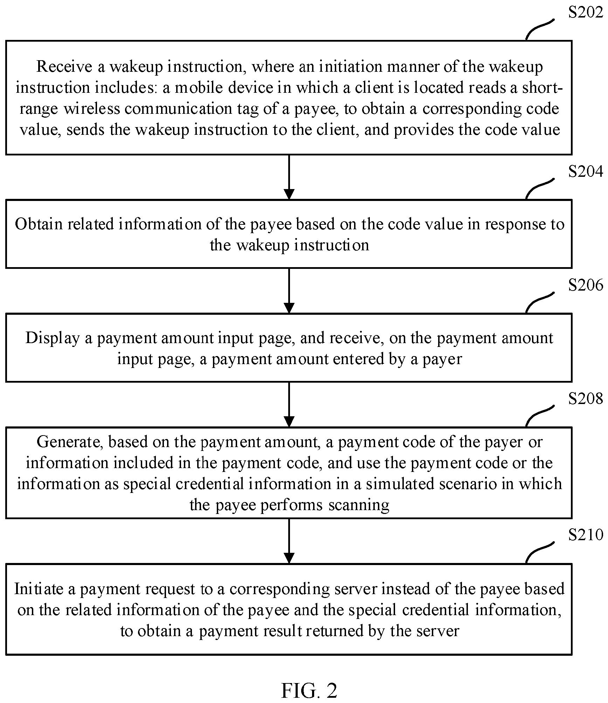

According to the above-mentioned descriptions, one or more embodiments of this specification further provide a schematic flowchart of a specific implementation solution of a payment method. As shown in FIG. 2, the payment method is performed by a client of a payment application on a wearable device of a payer.

A procedure in FIG. 2 includes the following steps.

S202: Receive a wakeup instruction, where an initiation manner of the wakeup instruction includes: a mobile device in which the client is located reads a short-range wireless communication tag of a payee, to obtain a corresponding code value, sends the wakeup instruction to the client, and provides the code value.

S204: Obtain related information of the payee based on the code value in response to the wakeup.

S206: Display a payment amount input page, and receive, on the payment amount input page, a payment amount entered by a payer.

S208: Generate, based on the payment amount, a payment code of the payer or information included in the payment code, and use the payment code or the information as special credential information in a simulated scenario in which the payee performs scanning.

Compared with a conventional payment code, the payment code that is of the payer and that can be generated or the information included in the payment code at least additionally indicates the payment amount, so that a payment process is more secure and accurate for the payer.

S210: Initiate a payment request to a corresponding server instead of the payee based on the related information of the payee and the special credential information, to obtain a payment result returned by the server.

When the special credential information is generated, the related information of the payee is also incorporated together. The credential information obtained in this way is more integrated, to help correlate a current payer and a current payee more reliably. The credential information obtained in this way is more particular than conventional credential information.

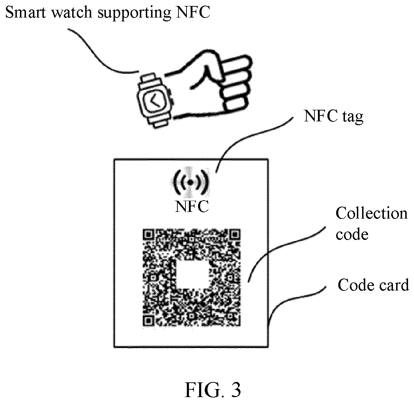

More intuitively, one or more embodiments of this specification further provide a schematic diagram of an application scenario of the method in FIG. 1, as shown in FIG. 3.

In an application scenario in FIG. 3, a user serves as a payer, and a merchant serves as a payee. The merchant provides a collection two-dimensional code of the merchant, and provides a corresponding NFC tag for nearby deployment. For example, if the collection two-dimensional code is not shielded, the collection two-dimensional code is attached to a collection two-dimensional code card. Optionally, the user uses a wearable device such as a smart watch to pay based on the NFC tag rather than the collection two-dimensional code, and another user without such a wearable device can use a smartphone to scan the collection two-dimensional code for payment.

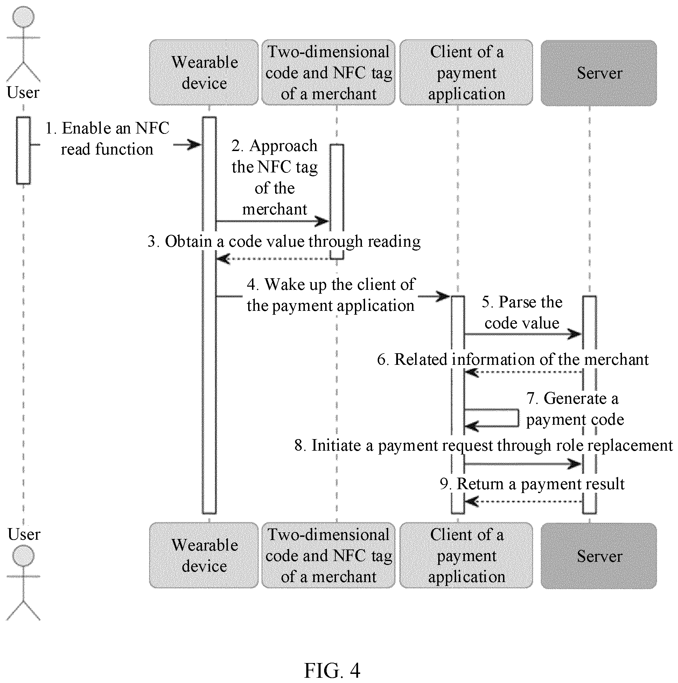

Further, one or more embodiments of this specification further provide a schematic flowchart of a solution in which a client of a user simulates a scenario in which a payee performs scanning and pays a merchant in the scenario in FIG. 3, as shown in FIG. 4.

A procedure in FIG. 4 includes the following steps.

For a smart watch worn by the user, the user enables an NFC read function in advance, and a client of a payment application is installed in the smart watch.

The user moves the smart watch to approach the NFC tag of the merchant when shopping at the merchant and performing payment.

The smart watch reads a code value from the NFC tag of the merchant by using the NFC read function of the smart watch.

The smart watch wakes up the client of the payment application installed on the smart watch, and provides the code value to the client.

The client requests a server of the payment application to parse the code value.

The server parses the code value, to obtain related information of the merchant, and returns the related information to the client.

The client generates a payment code of the client.

The client simulates the role of a replaced merchant based on the payment code of the client and the related information of the merchant, and initiates a payment request to the server.

The server performs corresponding deduction processing in response to the payment request, and optionally pays (payment processing can be delayed, for example, by day or week) the merchant, to return a payment result.

Based on such a procedure, the user uses the smart watch to touch the NFC tag of the merchant, and wakes up the client of the payment application. Optionally, a payment amount is entered, so that payment can be conveniently completed by interacting with the server without further depending on the merchant. Therefore, a user mobile device without a camera can also be used for payment of a merchant without a code scanning machine, the payment amount can be controlled by the user, and the merchant easily supports such a payment manner at low costs.

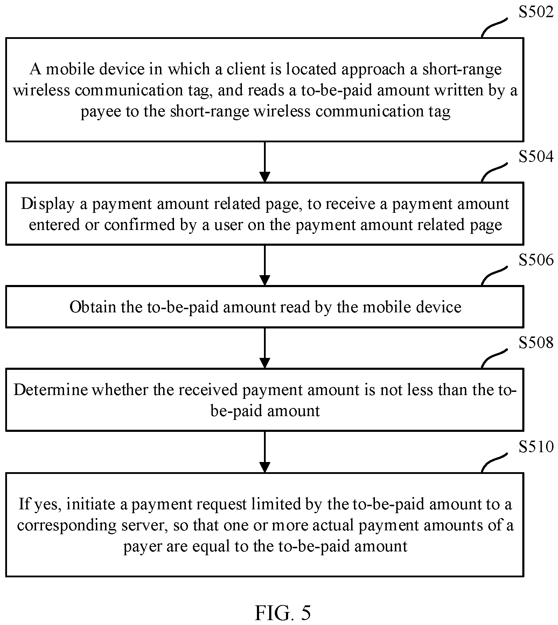

Security and trust are enhanced above mainly from the perspective of the payer (user). In actual applications, to strengthen the trust between the payer and the payee, a risk caused by a possible abnormality of the payer also needs to be considered. Based on such a consideration, one or more embodiments of this specification further provide a schematic flowchart of a payment amount control solution when a client of a payer simulates a scenario in which a payee performs scanning, to ensure benefits of both a payer and the payee, and strengthen the trust between the payer and the payee, as shown in FIG. 5. The solution can be performed with reference to the procedure in FIG. 1 and FIG. 2.

A procedure in FIG. 5 includes the following steps.

S502: A mobile device in which the client is located approach a short-range wireless communication tag, and reads a to-be-paid amount written by a payee to the short-range wireless communication tag.

The to-be-paid amount can be written instantly currently, or can be written in advance. For the latter manner, for example, a corresponding amount of one or more corresponding products is written. During reading, the user can manually select a product or a quantity of products by using a client or through a manual operation of the user. When the user does not need to perform such an additional operation, the latter manner is particularly applicable to a scenario in which the to-be-paid amount is fixed, for example, a single product such as a ticket is sold.

When the above-mentioned step of initiating the payment request to the corresponding server is performed, the following steps can be specifically additionally performed.

S504: Display a payment amount related page, to receive a payment amount entered or confirmed by a user on the payment amount related page.

The to-be-paid amount is an amount agreed on by the user who serves as the payee, and the payment amount is an amount agreed on by the payer. This provides the two parties with means in which the two parties perform control actively, to reach a subsequent agreement.

S506: Obtain the to-be-paid amount read by the mobile device.

S508: Determine whether the received payment amount is not less than the to-be-paid amount.

If the received payment amount is equal to the to-be-paid amount, the two parties have reached an agreement, to continue payment processing. If the received payment amount is greater than the to-be-paid amount, the payment amount may be incorrectly entered by the user. In this case, a corresponding prompt can be given, so that the user can further check the payment amount, to avoid a loss of the benefit.

S510: If yes, initiate a payment request limited by the to-be-paid amount to the corresponding server, so that one or more actual payment amounts of the payer are equal to the to-be-paid amount.

If the received payment amount is less than the to-be-paid amount (which may be due to a user operation error or a payee operation error), the benefit of the payee may be damaged. In this case, the user can be prompted to perform correction, and then, the payment request is initiated. Alternatively, a payment service of a difference between the payment amount and the to-be-paid amount can be additionally initiated for the user. After the user performs confirmation (for example, after simply inquiring a payee), the user pays for a plurality of times when performing payment processing, so that a payment service with a user operation error can also be normally split. There is no need to roll back the service. This reduces a risk of misunderstanding and a conflict between the two parties, and there is higher fault tolerance for possible operation errors of the two parties.

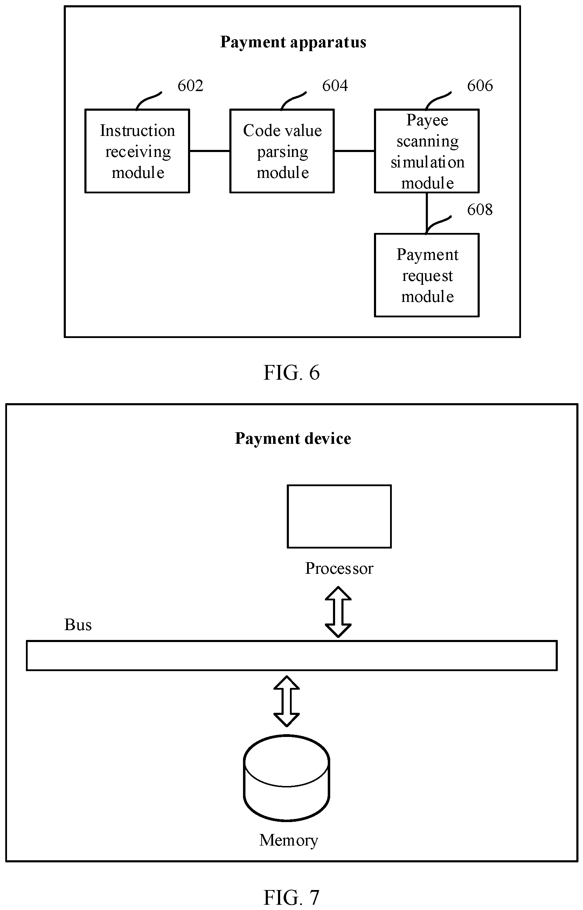

Based on the same idea, one or more embodiments of this specification further provides an apparatus and a device that correspond to the above-mentioned method, as shown in FIG. 6 and FIG. 7. The apparatus and the device can correspondingly perform the above-mentioned method and related optional solutions.

FIG. 6 is a schematic structural diagram of a payment apparatus according to one or more embodiments of this specification. The apparatus is applied to a client of a payment application, and the apparatus includes:
an instruction receiving module 602, configured to receive a wakeup instruction, where an initiation manner of the wakeup instruction includes: a mobile device in which the client is located reads a short-range wireless communication tag of a payee, to obtain a corresponding code value, sends the wakeup instruction to the client, and provides the code value;
a code value parsing module 604, configured to obtain related information of the payee based on the code value in response to the wakeup instruction;
a payee code scanning simulation module 606, configured to simulate, based on the related information, a predetermined process of code scanning payment performed when the payee serves as a code scanning party; and
a payment request module 608, configured to initiate a payment request to a corresponding server instead of the payee by executing the simulated predetermined process, to obtain a payment result returned by the server.

Optionally, the payment request module 608 is configured to: obtain credential information that can be obtained when a corresponding payment code presented by a payer is scanned when the payee serves as the code scanning party; and
initiate the payment request to the corresponding server instead of the payee based on the credential information and the related information.

Optionally, the payment request module 608 is configured to: generate the payment code of the payer or information included in the payment code, and use the payment code or the information as the credential information that can be obtained when the corresponding payment code presented by the payer is scanned when the payee serves as the code scanning party.

Optionally, the payment request module 608 is configured to: receive a value assignment operation performed by the payer on a product-related extension field; and
initiate, to the corresponding server instead of the payee based on the product-related extension field obtained after a value assignment, the credential information, and the related information, a payment request that carries an extension request corresponding to the value assignment.

The extension request relates to product reservation and/or product customization.

Optionally, the payment request module 608 is configured to: display a payment amount input page, to receive a payment amount entered by a user; and
initiate, to the corresponding server based on the received payment amount, a payment request limited by the payment amount.

Optionally, a collection code generated by the payee based on the code value is further presented at a proximity location of the short-range wireless communication tag.

Optionally, the mobile device is a wearable device.

Optionally, the wearable device includes a smart watch without a camera supporting code scanning.

Optionally, that the mobile device in which the client is located reads the short-range wireless communication tag of the payee specifically includes:
reading, by the mobile device in which the client is located, a to-be-paid amount currently written by the payee to the short-range wireless communication tag; and
the payment request module 608 is configured to: display a payment amount related page, to receive the payment amount entered or confirmed by the user on the payment amount related page;
obtain the to-be-paid amount read by the mobile device;
determine whether the received payment amount is not less than the to-be-paid amount; and
if yes, initiate a payment request limited by the to-be-paid amount to the corresponding server, so that a current actual payment amount of the user is equal to the to-be-paid amount.

Optionally, the short-range wireless communication tag is an NFC tag.

FIG. 7 is a schematic structural diagram of a payment device according to one or more embodiments of this specification. The payment device is applied to a client of a payment application, and the device includes:
at least one processor; and
a memory communicatively connected to the at least one processor.

The memory stores instructions that can be executed by the at least one processor, and the instructions are executed by the at least one processor, to enable the at least one processor to perform the following operations:
receiving a wakeup instruction, where an initiation manner of the wakeup instruction includes: a mobile device in which the client is located reads a short-range wireless communication tag of a payee, to obtain a corresponding code value, sends the wakeup instruction to the client, and provides the code value;
obtaining related information of the payee based on the code value in response to the wakeup instruction;
simulating, based on the related information, a predetermined process of code scanning payment performed when the payee serves as a code scanning party; and
initiating a payment request to a corresponding server instead of the payee by executing the simulated predetermined process, to obtain a payment result returned by the server.

Based on the same idea, one or more embodiments of this specification further provide a nonvolatile computer storage medium, storing computer-executable instructions, and applied to a client of a payment application. The computer-executable instructions are set to:
receiving a wakeup instruction, where an initiation manner of the wakeup instruction includes: a mobile device in which the client is located reads a short-range wireless communication tag of a payee, to obtain a corresponding code value, sends the wakeup instruction to the client, and provides the code value;
obtaining related information of the payee based on the code value in response to the wakeup instruction;
simulating, based on the related information, a predetermined process of code scanning payment performed when the payee serves as a code scanning party; and
initiating a payment request to a corresponding server instead of the payee by executing the simulated predetermined process, to obtain a payment result returned by the server.

In the 1990s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. Almost all designers program an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. The designer performs programming to "integrate" a digital system to a PLD without requesting a chip manufacturer to design and manufacture an application-specific integrated circuit chip. In addition, currently, instead of manually manufacturing an integrated circuit chip, such programming is mostly implemented by using "logic compiler" software. The "logic compiler" software is similar to a software compiler used to develop and write a program. Original code needs to be written in a particular programming language before being compiled. The language is referred to as a hardware description language (HDL). There are many HDLs such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). At present, the Very-High-Speed Integrated Circuit Hardware Description Language (VHDL) and Verilog are most commonly used. It should also be clear to a person skilled in the art that a hardware circuit that implements a logical method procedure can be readily obtained once the method procedure is logically programmed by using the several hardware description languages described above and is programmed into an integrated circuit.

A controller can be implemented by using any appropriate method. For example, the controller can be a microprocessor or a processor, or a computer readable medium that stores computer-readable program code (such as software or firmware) that can be executed by the microprocessor or the processor, a logic gate, a switch, an application-specific integrated circuit (ASIC), a programmable logic controller, or a built-in microprocessor. Examples of the controller include but are not limited to the following microprocessors: ARC 625D, Atmel AT91SAM, Microchip PIC18F26K20, and Silicone Labs C8051F320. A storage controller can also be implemented as a part of the control logic of the storage. A person skilled in the art also knows that in addition to implementing the controller by using only the computer-readable program code, logic programming can be performed on method steps to enable the controller to implement the same function in a form of a logic gate, a switch, an application specific integrated circuit, a programmable logic controller, or an embedded microcontroller. Therefore, the controller can be considered as a hardware component, and an apparatus configured to implement various functions in the controller can also be considered as a structure in the hardware component. Alternatively, an apparatus configured to implement various functions can even be considered as both a software module implementing the method and a structure in the hardware component.

The systems, apparatuses, modules, or units described in the above-mentioned embodiments can be specifically implemented by a computer chip or an entity, or can be implemented by a product having a certain function. Atypical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the above-mentioned apparatuses are described by dividing the apparatus into various units based on functions. Certainly, when this specification is implemented, functions of the units can be implemented in one or more pieces of software and/or hardware.

A person skilled in the art should understand that the embodiments of this specification can be provided as methods, systems, or computer program products. Therefore, the embodiments of this specification can use a form of hardware only embodiments, software only embodiments, or embodiments with a combination of software and hardware. In addition, the embodiments of this specification can use a form of a computer program product that is implemented on one or more computer-usable storage media (including but not limited to a disk storage, a CD-ROM, an optical storage, or the like) that include computer-usable program code.

This specification is described with reference to the flowcharts and/or block diagrams of the method, the device (system), and the computer program product according to the embodiments of this specification. It should be understood that computer program instructions can be used to implement each procedure and/or each block in the flowcharts and/or the block diagrams and a combination of a procedure and/or a block in the flowcharts and/or the block diagrams. These computer program instructions can be provided for a general-purpose computer, a dedicated computer, an embedded processor, or a processor of another programmable data processing device to generate a machine, so the instructions executed by the computer or the processor of the another programmable data processing device generate an apparatus for implementing a specific function in one or more processes in the flowcharts and/or in one or more blocks in the block diagrams.

It should be further noted that, the terms "include", "comprise", or any other variant thereof are intended to cover a non-exclusive inclusion, so that a process, a method, a product or a device that includes a list of elements not only includes those elements but also includes other elements which are not expressly listed, or further includes elements inherent to such process, method, product or device. Without more constraints, an element preceded by "includes a ..." does not preclude the existence of additional identical elements in the process, method, product or device that includes the element.

This specification can be described in the general context of computer-executable instructions, for example, a program module. Usually, the program module includes a routine, a program, an object, a component, a data structure, etc. executing a specific task or implementing a specific abstract data type. This specification can alternatively be practiced in distributed computing environments in which tasks are performed by remote processing devices that are connected through a communication network. In the distributed computing environments, the program module can be located in both local and remote computer storage media including storage devices.

The embodiments in this specification are described in a progressive manner. For the same or similar parts of the embodiments, references can be made to the embodiments. Each embodiment focuses on a difference from other embodiments. Particularly, the embodiments of the apparatus, the device, and the nonvolatile computer storage medium are briefly described because they are basically similar to the method embodiments. For related parts, references can be made to related descriptions in the method embodiments.

Specific embodiments of this specification are described above. Other embodiments fall within the scope of the appended claims. In some cases, the actions or steps described in the claims can be performed in an order different from that in the embodiments, and the desired results can still be achieved. In addition, the process depicted in the accompanying drawings does not necessarily need a particular sequence to achieve the desired results. In some implementations, multi-tasking and parallel processing are feasible or may be advantageous.

The previous descriptions are merely one or more embodiments of this specification and are not intended to limit this specification. A person skilled in the art can make various changes and variations to the one or more embodiments of this specification. Any modifications, equivalent replacements, improvements, etc. made within the spirit and principle of the one or more embodiments of this specification shall fall within the scope of the claims of this specification.

## Claims

1. A payment method, applied to a client of a payment application, wherein the method comprises:
receiving (S102) a wakeup instruction, wherein an initiation manner of the wakeup instruction comprises: a mobile device in which the client is located reads a short-range wireless communication tag of a payee, to obtain a corresponding code value, sends the wakeup instruction to the client, and provides the code value;
obtaining (S104) related information of the payee based on the code value in response to the wakeup instruction;
simulating (S106), based on the related information, a predetermined process of code scanning payment performed when the payee serves as a code scanning party; and
initiating (S108) a payment request to a corresponding server instead of the payee by executing the simulated predetermined process, to obtain a payment result returned by the server.

2. The method according to claim 1, wherein executing the simulated predetermined process specifically comprises:
obtaining credential information that can be obtained when a corresponding payment code presented by a payer is scanned when the payee serves as the code scanning party; and
initiating the payment request to the corresponding server instead of the payee based on the credential information and the related information.

3. The method according to claim 2, wherein obtaining credential information that can be obtained when a corresponding payment code presented by a payer is scanned when the payee serves as the code scanning party specifically comprises:
generating the payment code of the payer or information comprised in the payment code, and using the payment code or the information as the credential information that can be obtained when the corresponding payment code presented by the payer is scanned when the payee serves as the code scanning party.

4. The method according to claim 2, wherein initiating the payment request to the corresponding server instead of the payee based on the credential information and the related information specifically comprises:
receiving a value assignment operation performed by the payer on a product-related extension field; and
initiating, to the corresponding server instead of the payee based on the product-related extension field obtained after a value assignment, the credential information, and the related information, a payment request that carries an extension request corresponding to the value assignment, wherein
the extension request relates to product reservation and/or product customization.

5. The method according to claim 1, wherein initiating (S 108) a payment request to a corresponding server specifically comprises:
displaying a payment amount input page, to receive a payment amount entered by a payer; and
initiating, to the corresponding server based on the received payment amount, a payment request limited by the payment amount.

6. The method according to claim 1, wherein a collection code generated by the payee based on the code value is further presented at a proximity location of the short-range wireless communication tag.

7. The method according to any one of claims 1 to 6, wherein the mobile device is a wearable device.

8. The method according to claim 7, wherein the wearable device comprises a smart watch without a camera supporting code scanning.

9. The method according to claim 7, wherein that the mobile device in which the client is located reads the short-range wireless communication tag of the payee specifically comprises:
reading, by the mobile device in which the client is located, a to-be-paid amount written by the payee to the short-range wireless communication tag; and
initiating a payment request to a corresponding server specifically comprises:
displaying a payment amount related page, to receive the payment amount entered or confirmed by the payer on the payment amount related page;
obtaining the to-be-paid amount read by the mobile device;
determining whether the received payment amount is not less than the to-be-paid amount; and
upon determining that the received payment amount is not less than the to-be-paid amount, initiating a payment request limited by the to-be-paid amount to the corresponding server, so that one or more actual payment amounts of the payer are equal to the to-be-paid amount.

10. The method according to claim 1, wherein the short-range wireless communication tag is an NFC tag.

11. A payment apparatus, applied to a client of a payment application, wherein the apparatus comprises means for performing the steps of the method of any of claims 1-10.

12. A computing device comprising a memory and a processor, wherein the computing device is a client of a payment application and the memory stores executable instructions that, in response to execution by the processor, causes the computing device to perform the steps of the method of any of claims 1-10.

13. A computer-readable storage medium comprising instructions stored therein that, when executed by a processor of a computing device that is a client of a payment application, causes the computing device to perform the steps of the method of any of claims 1-10.

14. A computer program product comprising instructions stored in a computer-readable storage medium, when executed by a processor of a computing device that is a client of a payment application, causes the computing device to perform the steps of the method of any of claims 1-10.
